# EUROPEAN PATENT SPECIFICATION

(11) **EP 4 024 374 B1**
(45) Date of publication and mention of the grant of the patent: **01.01.2025**
(21) Application number: 20860088.2
(22) Date of filing: 20.08.2020
(51) Int. Cl.: G09F 9/30, G09F 9/33, F16M 11/38, F16M 11/04, G06F 1/16, H04M 1/02

(54) **FOLDABLE ELECTRONIC DEVICE AND FOLDABLE SCREEN MOUNTING STRUCTURE**
KLAPPBARES ELEKTRONISCHES GERÄT UND MONTAGESTRUKTUR FÜR FALTBAREN SCHIRM
DISPOSITIF ÉLECTRONIQUE PLIABLE ET STRUCTURE DE MONTAGE D'ÉCRAN PLIABLE

(30) Priority: 06.09.2019 CN 201910843899
(43) Date of publication of application: 06.07.2022
(73) Proprietor: Huawei Technologies Co., Ltd., Longgang Shenzhen, Guangdong 518129 (CN)
(72) Inventor: GAO, Zongyu, Shenzhen, Guangdong 518129 (CN); ZOU, Hailiang, Shenzhen, Guangdong 518129 (CN); WANG, Yuan, Shenzhen, Guangdong 518129 (CN); GAO, Xiaochuan, Shenzhen, Guangdong 518129 (CN); ZHU, Ailan, Shenzhen, Guangdong 518129 (CN)
(74) Representative: Epping - Hermann - Fischer
(86) International application number: PCT/CN2020/110188
(87) International publication number: WO 2021/042998

(56) References cited:
- CN-A- 105 407 194
- CN-A- 105 842 890
- CN-A- 108 520 703
- CN-U- 204 069 046
- CN-U- 211 479 555
- CN-Y- 2 521 646
- KR-A- 20160 056 763

## Description

### TECHNICAL FIELD

This application relates to the field of electronic device technologies, and in particular, to a foldable electronic device.

### BACKGROUND

Currently, with increasing development of electronic device technologies, a user has a higher requirement on a large-sized electronic device that is easy to carry. Therefore, an electronic device with a foldable display receives wide attention. The foldable display may be unfolded when being used, to provide a larger display area, and may be switched to a folded state when not being used, to facilitate carrying by the user.

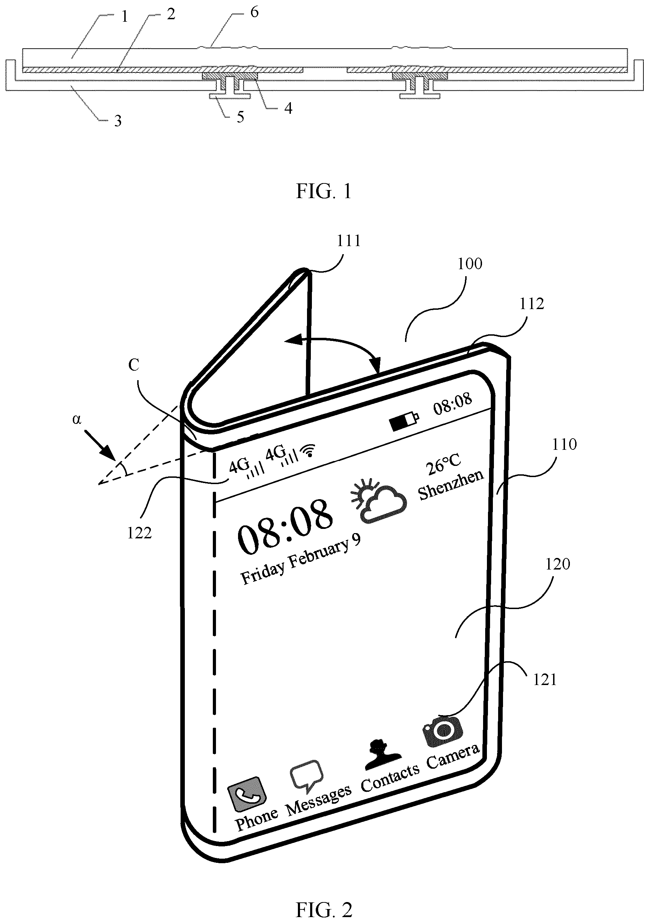

The foldable display is mounted on the electronic device, to obtain a foldable electronic device. FIG. 1 is a schematic diagram of a foldable display mounting structure in a conventional technology. In FIG. 1, a foldable display 1 is fixedly disposed on a metal sheet 2, a nut 4 is fixedly disposed on the metal sheet 2, and the foldable display 1 is mounted on a middle frame 3 of an electronic device by using the nut 4 and a screw 5 that adapts to the nut 4. The nut 4 is fixedly connected to the metal sheet 2 through laser welding.

The conventional technology has at least the following problems: The laser welding easily causes local overheating at a joint between the metal sheet 2 and the nut 4, resulting in deformation of the metal sheet 2, and leading to an uneven surface of the metal sheet 2. After the foldable display 1 is mounted on the metal sheet 2, especially when the electronic device is switched to the folded state during usage, a mold mark 6 is easily generated on a surface of the foldable display, and user experience is affected.

CN 204 069 046 U describes a kind of clamshell phone employing foldable housing assembly, folding soft screen assembly, synchronous magnetic attracting device and locking device to realize mobile phone bending fold and locking It is characterized in that fore shell and back cover are connected in one by one piece of honeycomb sheet rubber by housing unit, and bent by honeycomb sheet rubber and realize the folding of housing unit; folding soft screen assembly is installed on the installed surface of housing unit fore shell and back cover, and can inwardly make uniform radius bend, at the buckled zone of folding soft screen, adopts double faced adhesive tape to be pasted together by the adhesive surface of folding soft screen and honeycomb sheet rubber; synchronous magnetic attracting device and locking device cooperating, enable mobile phone folding locking and expansion easily.

### SUMMARY

The invention is set out in the appended set of claims. This application provides a foldable electronic device and a foldable display mounting structure, so that no mold mark or convex hull is generated on a surface of a foldable display during usage.

According to a first aspect, a foldable electronic device is provided, including a housing and a middle frame, where an electronic element is disposed in the housing, and the foldable electronic device further includes: a foldable display, where the foldable display is flexible and bendable, the foldable display includes a flexible cover and a flexible displaying module, both the flexible cover and the flexible displaying module are flexible and bendable, the flexible cover is transparent, the flexible displaying module displays through the flexible cover, the foldable display further includes a first displaying part and a second displaying part, and both the first displaying part and the second displaying part are configured to display information; a support mechanical part, where the support mechanical part is fixedly connected to the foldable display, the support mechanical part is located on a side, facing the housing, of the foldable display, and is configured to support the foldable display; and at least one connecting piece, where the connecting piece is fixed to the support mechanical part by using a thermosetting resin layer, the connecting piece is fixedly connected to the middle frame of the electronic device, and is configured to mount the foldable display and the support mechanical part on the electronic device.

Compared with a conventional technology in which a connecting piece is fixed to a support mechanical part through welding (a welding temperature is usually relatively high), in this application, the connecting piece is fixed to the support mechanical part by using the thermosetting resin layer. In a process of forming the thermosetting resin layer, no excessively high temperature is required, and a joint between the support mechanical part and the connecting piece does not deform due to local overheating and stress, so that no mold mark or convex hull is generated on a surface of the foldable display during usage. In this way, product competitiveness is improved.

In addition, in this application, the connecting piece is fixed to the support mechanical part by using the thermosetting resin layer Compared with the conventional technology in which the connecting piece is fixed to the support mechanical part through welding, a processing technology is simple, processing efficiency is high, and production costs are reduced.

Compared with another material such as thermosetting rubber, the thermosetting resin layer has characteristics of high adhesive strength and high modulus, and has good bonding reliability. This facilitates a reliable connection between the connecting piece and the support mechanical part. In addition, a thickness of the thermosetting resin is uniform and controllable, and the thermosetting resin can be cut into different shapes through die cut. This facilitates generation and processing, and helps reduce production costs.

In a possible design, the thermosetting resin layer is formed by thermally curing at least one of epoxy resin, acrylic resin, and polyurethane. The foregoing materials have higher adhesive strength. By selecting the foregoing materials, the thermosetting resin layer may be disposed as thin as possible on the premise that reliable connection and fixing are satisfied. This helps reduce a thickness of the electronic device, facilitate a light and thin design of the electronic device, and improve product competitiveness.

In a possible design, the connecting piece is made of a non-metallic material. For example, the connecting piece may be made of a plastic material. The foregoing disposing helps reduce a weight, facilitates the light and thin design of the electronic device, improves user experience, facilitates carrying by a user, and can improve product competitiveness.

In a possible design, there are two or more connecting pieces, and the connecting pieces are fixed to a side, facing the housing, of the support mechanical part. In this way, based on a specific requirement, a quantity of connecting pieces inside the electronic device may be set, or the connecting pieces may be evenly arranged, or the connecting pieces may be evenly arranged based on a specific requirement to evenly arrange the foldable display, so that a good image presentation effect is achieved.

In a possible design, the connecting piece is fixedly connected to the middle frame of the electronic device in a detachable manner. In this way, the foldable display may be indirectly connected to the middle frame by using the connecting piece. This improves stability, facilitates disassembly, and facilitates maintenance of the electronic device. In a possible design, the support mechanical part is a metal sheet. In this way, it is ensured that the support mechanical part has strength and can provide sufficient support, and further has a feature of being light and thin.

In a possible design, the connecting piece is any one of a nut, a buckle, and a rivet. In this way, the connecting piece can be easily disassembled, to facilitate maintenance of the electronic device.

In a possible design, the foldable electronic device may be any device that has a communication and/or storage function, for example, may be an intelligent device such as a mobile phone, a tablet computer, a watch, an e-reader, a notebook computer, a vehicle-mounted device, a web television, or a wearable device.

In a possible design, the thermosetting resin layer may fix the connecting piece to the support mechanical part in the following manner: Performing die cut on a thermosetting resin material, to obtain an adhesive film of a predetermined size; matching the adhesive film obtained through die cut with the support mechanical part and sticking the adhesive film to the support mechanical part; matching the connecting piece with the adhesive film and sticking the connecting piece to the adhesive film; and performing thermal curing processing on the adhesive film, to generate the thermosetting resin layer, where the thermosetting resin layer fixes the connecting piece to the support mechanical part.

According to a second aspect, a foldable display mounting structure is provided, used in an electronic device. The foldable display mounting structure includes a foldable display, where the foldable display is flexible and bendable, the foldable display includes a flexible cover and a flexible displaying module, both the flexible cover and the flexible displaying module are flexible and bendable, the flexible cover is transparent, the flexible displaying module displays through the flexible cover, the foldable display further includes a first displaying part and a second displaying part, and both the first displaying part and the second displaying part are configured to display information; a support mechanical part, where the support mechanical part is fixedly connected to the foldable display, the support mechanical part is located on a side, facing a housing of the electronic device, of the foldable display, and is configured to support the foldable display; and at least one connecting piece, where the connecting piece is fixed to the support mechanical part by using a thermosetting resin layer, the connecting piece is fixedly connected to a middle frame of the electronic device, and is configured to mount the foldable display and the support mechanical part on the electronic device.

Compared with a conventional technology in which a connecting piece is fixed to a support mechanical part through welding (a welding temperature is usually relatively high), in this application, the connecting piece is fixed to the support mechanical part by using the thermosetting resin layer. In a process of forming the thermosetting resin layer, no excessively high temperature is required, and a joint between the support mechanical part and the connecting piece does not deform due to local overheating and stress, so that no mold mark or convex hull is generated on a surface of the foldable display during usage. In this way, product competitiveness is improved.

In addition, in this application, the connecting piece is fixed to the support mechanical part by using the thermosetting resin layer. Compared with the conventional technology in which the connecting piece is fixed to the support mechanical part through welding, a processing technology is simple, processing efficiency is high, and production costs are reduced.

Compared with another material such as thermosetting rubber, the thermosetting resin layer has characteristics of high adhesive strength and high modulus, and has good bonding reliability. This facilitates a reliable connection between the connecting piece and the support mechanical part. In addition, a thickness of the thermosetting resin is uniform and controllable, and the thermosetting resin can be cut into different shapes through die cut. This facilitates generation and processing, and helps reduce production costs.

In a possible design, the thermosetting resin layer is formed by thermally curing at least one of epoxy resin, acrylic resin, and polyurethane. The foregoing materials have higher bond strength. By selecting the foregoing materials, the thermosetting resin layer may be disposed as thin as possible on the premise that reliable connection and fixing are satisfied. This helps reduce a thickness of the electronic device, facilitate a light and thin design of the electronic device, and improve product competitiveness.

In a possible design, the connecting piece is made of a non-metallic material. For example, the connecting piece may be made of a plastic material. The foregoing disposing helps reduce a weight, facilitates the light and thin design of the electronic device, improves user experience, facilitates carrying by a user, and can improve product competitiveness.

In a possible design, there are two or more connecting pieces, and the connecting pieces are fixed to a side, facing the housing, of the support mechanical part. In this way, based on a specific requirement, a quantity of connecting pieces inside the electronic device may be set, or the connecting pieces may be evenly arranged, or the connecting pieces may be evenly arranged based on a specific requirement to evenly arrange the foldable display, so that a good image presentation effect is achieved.

In a possible design, the connecting piece is fixedly connected to the middle frame of the electronic device in a detachable manner. In this way, the foldable display may be indirectly connected to the middle frame by using the connecting piece. This improves stability, facilitates disassembly, and facilitates maintenance of the electronic device. In a possible design, the support mechanical part is a metal sheet. In this way, it is ensured that the support mechanical part has certain strength and can provide sufficient support, and further has a feature of being light and thin.

In a possible design, the connecting piece is any one of a nut, a buckle, and a rivet. In this way, the connecting piece can be easily disassembled, to facilitate maintenance of the electronic device.

In a possible design, the electronic device may be any device that has a communication and/or storage function, for example, may be an intelligent device such as a mobile phone, a tablet computer, a watch, an e-reader, a notebook computer, a vehicle-mounted device, a web television, or a wearable device.

In a possible design, the foldable display mounting structure may be obtained in the following manner: Performing die cut on a thermosetting resin material, to obtain an adhesive film of a predetermined size; matching the adhesive film obtained through die cut with the support mechanical part and sticking the adhesive film to the support mechanical part; matching the connecting piece with the adhesive film and sticking the connecting piece to the adhesive film; and performing thermal curing processing on the adhesive film, to generate the thermosetting resin layer, where the thermosetting resin layer fixes the connecting piece to the support mechanical part.

According to a third aspect, a processing method is provided. The method includes: Performing die cut on a thermosetting resin material, to obtain an adhesive film of a predetermined size; matching the adhesive film obtained through die cut with a support mechanical part and sticking the adhesive film to the support mechanical part; matching a connecting piece with the adhesive film and sticking the connecting piece to the adhesive film; and performing thermal curing processing on the adhesive film, to generate a thermosetting resin layer, where the thermosetting resin layer fixes the connecting piece to the support mechanical part.

In a possible design, the adhesive film is stuck to the support mechanical part by using a process such as matching and sticking performed by using a die cut piece or sticking performed by using a jig.

In a possible design, the predetermined size of the adhesive film is determined based on a size of the connecting piece. In a possible design, the support mechanical part to which the adhesive film and the connecting piece are stuck may be sent to a pressure oven for thermal curing processing.

### BRIEF DESCRIPTION OF DRAWINGS

FIG. 1 is a schematic diagram of a foldable display mounting structure in a conventional technology;
FIG. 2 is a schematic diagram of a foldable electronic device according to an embodiment of this application;
FIG. 3 is a schematic diagram of an electronic device in an unfolded state;
FIG. 4 is a schematic diagram of an electronic device in a folded state;
FIG. 5 is a schematic diagram of an electronic device in a folded state;
FIG. 6 is a schematic diagram of a structure of a foldable display;
FIG. 7 is a schematic diagram of a structure of a foldable display mounting structure in an unfolded state;
FIG. 8 is a schematic diagram of a structure of a foldable display mounting structure in a folded state;
FIG. 9 is a zoom-in diagram of an area D in FIG. 7;
FIG. 10 is a schematic diagram of a structure of a foldable display mounting structure in an unfolded state;
FIG. 11 is a flowchart of a processing method according to an embodiment of this application; and
FIG. 12 is a schematic diagram of a processing method according to an embodiment of this application.

### DESCRIPTION OF EMBODIMENTS

The following describes technical solutions of this application with reference to the accompanying drawings.

The following describes implementations of this application in detail. Examples of the implementations are shown in the accompanying drawings. Same or similar reference signs are always used to represent same or similar elements or elements having same or similar functions. The implementations described below with reference to the accompanying drawings are examples, and are merely used to explain this application, but cannot be understood as a limitation on this application.

It should be understood that, the terms "first", "second", and "third" in descriptions of this application are merely intended for a purpose of description, and shall not be understood as an indication or implication of relative importance or implicit indication of the number of indicated technical features. Therefore, a feature limited by "first", "second", or "third" may explicitly or implicitly include one or more features. In the descriptions of this application, "a plurality of" means two or more than two, unless otherwise specifically limited.

For example, a connection may be a fixed connection, a detachable connection, or an integrated connection. Alternatively, a connection may be a mechanical connection or an electrical connection, or may mean mutual communication. Alternatively, a connection may be a direct connection, or an indirect connection through an intermediate medium, or may be a connection between two elements or an interaction relationship between two elements. A person of ordinary skill in the art may interpret specific meanings of the foregoing terms in this application based on specific cases.

In the descriptions of this application, it should be understood that directions or position relationships indicated by the terms "up", "down", "front", "rear", "side", "inside", "outside", "horizontal", "vertical", and the like are based on the directions or position relationships shown in the accompanying drawings, and are merely intended to describe this application and simplify the descriptions, but are not intended to indicate or imply that an apparatus or an element shall have a specific direction or be formed and operated in a specific direction, and therefore shall not be understood as a limitation on this application.

An embodiment of this application provides a foldable electronic device. The foldable electronic device may be any device that has a communication and/or storage function, for example, may be an intelligent device such as a mobile phone, a tablet computer, a watch, an e-reader, a notebook computer, a vehicle-mounted device, a web television, or a wearable device.

FIG. 2 is a schematic diagram of a foldable electronic device according to an embodiment of this application. By way of example and not limitation, in this embodiment, the electronic device 100 is a mobile phone. As shown in FIG. 2, the electronic device 100 includes a housing 110 and a foldable display 120, where the foldable display 120 is mounted on the housing 110. The electronic device 100 further includes an electronic element (which is not shown in the figure) disposed in the housing 100. The electronic element includes, but is not limited to, a circuit board, a processor, a camera, a sensor, a microphone, a battery, and the like.

In this embodiment of this application, the electronic device 100 is foldable. The housing 110 of the electronic device 100 includes two parts that can be turned over relative to each other, for example, a first housing 111 and a second housing 112 in FIG. 2. The first housing 111 and the second housing 112 may be connected by using a rotating mechanism (which is not shown in the figure) disposed at a bent part C, so that the first housing 111 can be turned over relative to the second housing 112. For example, the rotating mechanism may be a gear (group) mechanism or a hinge mechanism.

In FIG. 2, the electronic device 100 may be folded by using the bent part C as an axis. Specifically, in FIG. 2, the second housing 112 is used as a reference point, and the first housing 111 may be folded by using the bent part C as the axis in a direction of approaching the second housing 112 or a direction of leaving the second housing 112. For example, the first housing 111 may be folded in the direction of approaching the second housing 112, so that an included angle α formed between the first housing 111 and the second housing 112 gradually decreases. For another example, the first housing 111 may be folded in the direction of leaving the second housing 112, so that the included angle formed between the first housing 111 and the second housing 112 gradually increases.

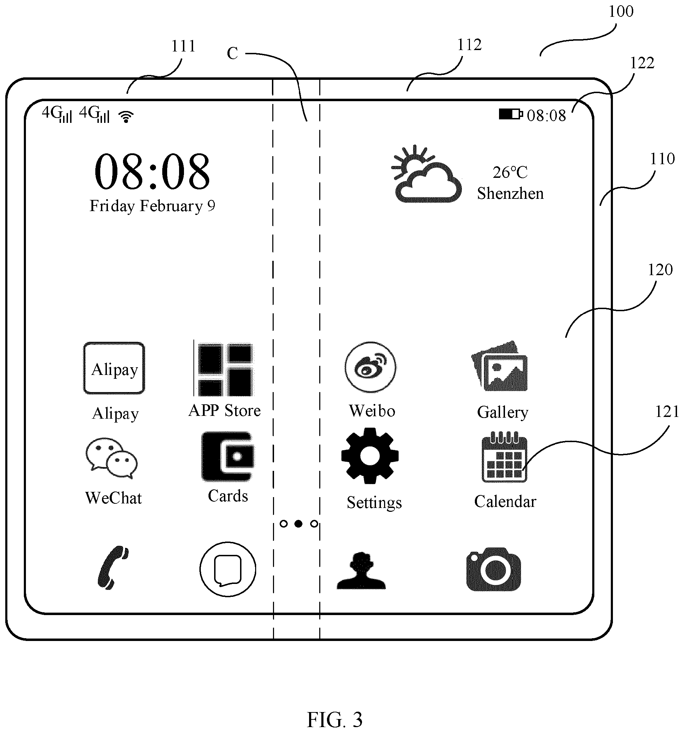

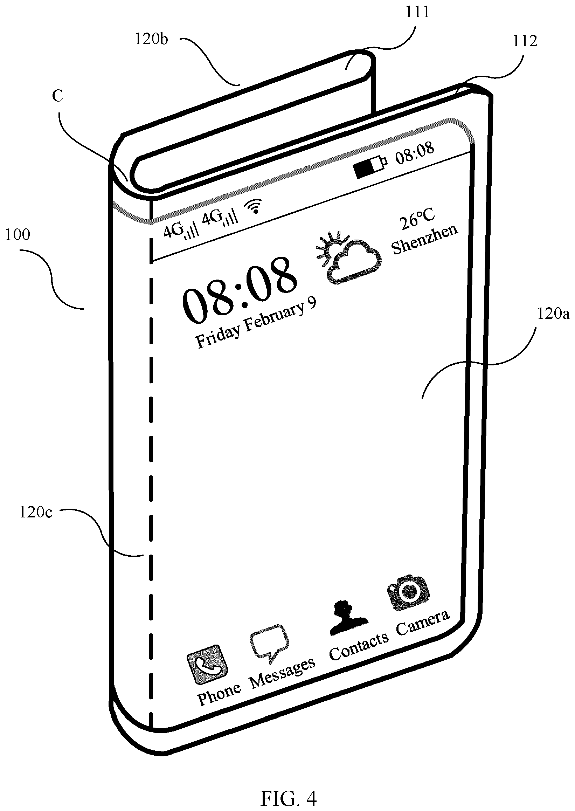

The electronic device 100 may be in different use states based on different folding angles. FIG. 3 is a schematic diagram of the electronic device 100 in an unfolded state (in this case, the included angle α is 180 degrees). FIG. 4 is a schematic diagram of an example in which the electronic device 100 is in a folded state. A user may set the electronic device 100 to different states based on a use requirement. For example, when large-screen displaying needs to be provided, the electronic device 100 may be set to the unfolded state shown in FIG. 3, to improve use experience of the user. When the electronic device 100 needs to be easily carried, the electronic device 100 may be set to the folded state shown in FIG. 4.

As shown in FIG. 2, the first housing 111 of the electronic device 100 can be folded in the direction of approaching the second housing 112 by using the bent part C as the axis, so that when the electronic device 100 is in the folded state shown in FIG. 4, the foldable display 120 is located on the periphery of the housing 110 and can face the user. Therefore, the electronic device 100 can continue to be used by the user.

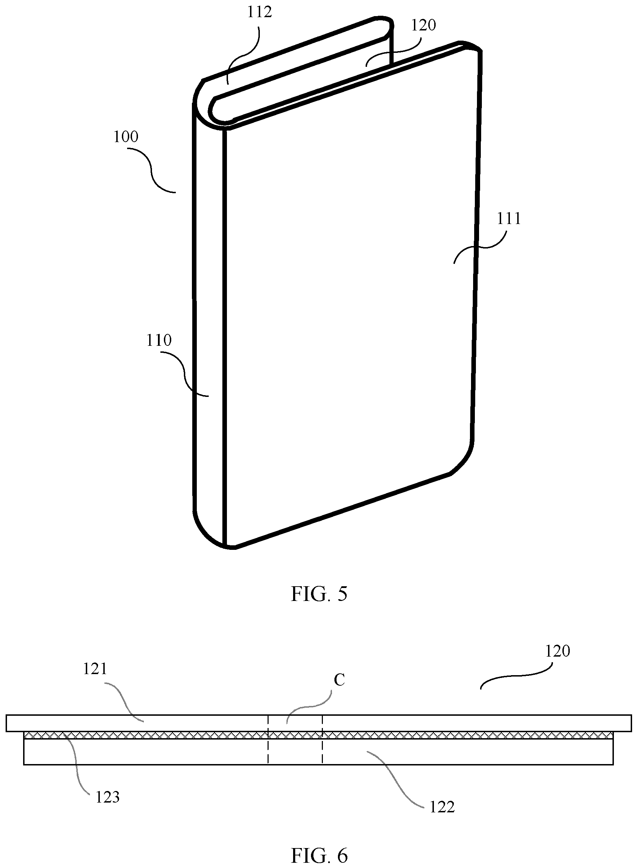

In addition, the electronic device 100 may alternatively be in another folded state. FIG. 5 is a schematic diagram of another example in which the electronic device 100 is in a folded state (in this case, the included angle α is 360 degrees). As shown in FIG. 2 and FIG. 5, the first housing 111 of the electronic device 100 may alternatively be folded in the direction of leaving the second housing 112 by using the bent part C as the axis, and continue to be turned over after the included angle α reaches 180 degrees (that is, the unfolded state shown in FIG. 3), so that when the electronic device 100 is in the folded state shown in FIG. 5, the foldable display 120 is surrounded by the housing 110. Therefore, the foldable display 120 can be protected when the electronic device 100 is carried.

In addition, in this embodiment, the bent part C of the electronic device 100 is along a vertical direction in FIG. 2 (that is, the electronic device 100 is folded by using a longitudinal direction as the axis). In another embodiment, the bent part of the electronic device 100 may alternatively be along a horizontal direction or another direction in FIG. 2. This is not limited in this application.

For example, the bent part of the electronic device 100 may be along the horizontal direction in FIG. 2, and the electronic device 100 may be folded by using the horizontal direction as the axis.

With reference to FIG. 2 to FIG. 4, the foldable display 120 covers the first housing 111 and the second housing 112. The foldable display 120 is bendable, and may be configured to display information and provide an interaction interface for a user.

The foldable display is also referred to as a flexible display. Currently, the flexible display attracts much attention due to a unique feature and great potential thereof. Compared with a conventional display, the flexible display has features of strong flexibility and bendability, and can provide a user with a new bendability-based interaction mode, to satisfy more requirements of the user on an electronic device. In some embodiments, the electronic device 100 may implement a displaying function by using a GPU, the foldable display 120, an application processor, and the like. The GPU is a microprocessor for image processing, and is connected to the foldable display 120 and the application processor. The GPU is configured to: perform mathematical and geometric calculation, and render an image. The processor of the electronic device may include one or more GPUs that execute program instructions to generate or change displaying information. The foldable display 120 is configured to display an image, a video, and the like. The foldable display 120 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, quantum dot light emitting diodes (quantum dot light emitting diodes, QLED), or the like. The electronic device 100 may implement a photographing function by using an ISP, a camera, a video codec, the GPU, the foldable display 120, the application processor, and the like. In some embodiments, the electronic device 100 may include one or N foldable displays 120, where N is a positive integer greater than 1.

The electronic device may further include a pressure sensor, configured to sense a pressure signal, and may convert the pressure signal into an electrical signal. In some embodiments, the pressure sensor may be disposed on the foldable display 120. There are many types of pressure sensors such as a resistive pressure sensor, an inductive pressure sensor, and a capacitive pressure sensor. The capacitive pressure sensor may include at least two parallel plates made of conductive materials. When a force is applied to the pressure sensor, capacitance between electrodes changes. The electronic device 100 determines pressure intensity based on a capacitance change. When a touch operation is performed on the foldable display 120, the electronic device 100 detects intensity of the touch operation by using the pressure sensor. The electronic device 100 may also calculate a touch position based on a detection signal of the pressure sensor. In some embodiments, touch operations that are performed in a same touch position but have different touch operation intensity may correspond to different operation instructions. For example, when a touch operation whose touch operation intensity is less than a first pressure threshold is performed on a Messages icon, an instruction for viewing an SMS message is executed. When a touch operation whose touch operation intensity is greater than or equal to the first pressure threshold is performed on the Messages icon, an instruction for creating an SMS message is executed.

As shown in FIG. 2, the foldable display 120 may be configured to display various information such as an application program icon 121 to the user. For example, the application program may include Phone, Contacts, Messages, Camera, and the like. In addition, the application program may further include icons such as Alipay, WeChat, Weibo, and Gallery shown in FIG. 3.

In addition, the foldable display 120 may further display a navigation bar 122, and the navigation bar 122 may include content such as a standard (signal strength) of a cellular network, a remaining battery level, and time. In addition, the foldable display 120 may be further configured to display content such as a date, time, and weather.

As shown in FIG. 4, when the foldable display 120 is in a bent state, the foldable display 120 may be divided into a first displaying part 120a, a second displaying part 120b relative to the first displaying part 120a, and a bent displaying part 120c that is connected to the first displaying part 120a and the second displaying part 120b and that is between the first displaying part 120a and the second displaying part 120b.

As shown in FIG. 4, when the user sets the electronic device 100 to the folded state, the electronic device 100 may present an effect of a double-side screen or a triple-side screen (to-be-specific, in this case, the bent displaying part 120c in the middle is also configured to display information), for flexible use and convenient carrying. As shown in FIG. 3, when the user sets the electronic device 100 to the unfolded state, the electronic device 100 may obtain a large-screen displaying effect, to help improve product expressiveness and user experience.

It should be understood that, in this embodiment, in addition to the unfolded state in FIG. 3 and the folded state in FIG. 4 and FIG. 5, the electronic device 100 may alternatively be in another state, for example, a state between the unfolded state in FIG. 3 and the folded state in FIG. 4 (to-be-specific, in this case, the electronic device 100 may be bent by an angle but has not been in the folded state in FIG. 4). This is not limited in this application.

FIG. 6 is a schematic diagram of a structure of a foldable display 120. In FIG. 6, for example, the foldable display 120 includes a flexible cover 121 and a flexible displaying module 122. Both the flexible cover 121 and the flexible displaying module 122 are bendable, and may be turned over relative to each other along a bent part.

The flexible cover 121 is connected to the flexible displaying module 122, to cover and protect the flexible displaying module 122. A size of the flexible cover 121 may be slightly greater than a size of the flexible displaying module 122, so that the flexible cover 121 can be connected to a frame of a housing 110 when a coverage effect is ensured.

The flexible cover 121 may be a transparent flexible glass cover or a transparent flexible plastic cover, so that the flexible displaying module 122 displays through the flexible cover 121. In addition, the flexible cover 121 may alternatively be made of another material. For example, the flexible cover 121 may alternatively be made of a composite material of flexible glass and flexible plastic.

In this embodiment of this application, the flexible displaying module 122 has features of strong flexibility and bendability. For example, the flexible displaying module 122 may be a flexible organic light-emitting diode (organic light-emitting diode, OLED) displaying module, or may be any other displaying module having features of being flexible and foldable. This is not limited in this application.

The flexible cover 121 may be mounted on the flexible displaying module 122 by using an adhesive. For example, as shown in FIG. 6, an adhesive layer 123 may be disposed on an outer surface of the flexible displaying module 122, and the flexible cover 121 is connected to the flexible displaying module 122 by using the adhesive layer 123.

In this embodiment, the adhesive may be an optically clear adhesive (optically clear adhesive, OCA). The optically clear adhesive is a double faced adhesive tape without a basis material, and has features such as colorless transparency, high light transmission (a light transmittance is greater than 99%), high adhesion, high temperature resistance, and ultraviolet resistance. In addition, the optically clear adhesive has a controllable thickness, and can provide a uniform spacing. Prolonged use of the optically clear adhesive will not cause problems of yellowing, stripping, and deterioration.

For example, the optically clear adhesive may be at least one of an abies balsam, a methanol adhesive, an unsaturated polyester and styrene monomer adhesive, an epoxy optically clear adhesive, a silicone resin adhesive, an acrylic acid cruel class photosensitive adhesive, and the like.

The electronic device 100 is foldable. Compared with a conventional non-foldable electronic device, the display 120 needs to be mounted more reliably, so that folding the display 120 for a plurality of times does not cause the display 120 to fall off or strip from the housing 110. In addition, this embodiment further provides a foldable display mounting structure, so that the foldable display 120 can be reliably mounted on the electronic device 100.

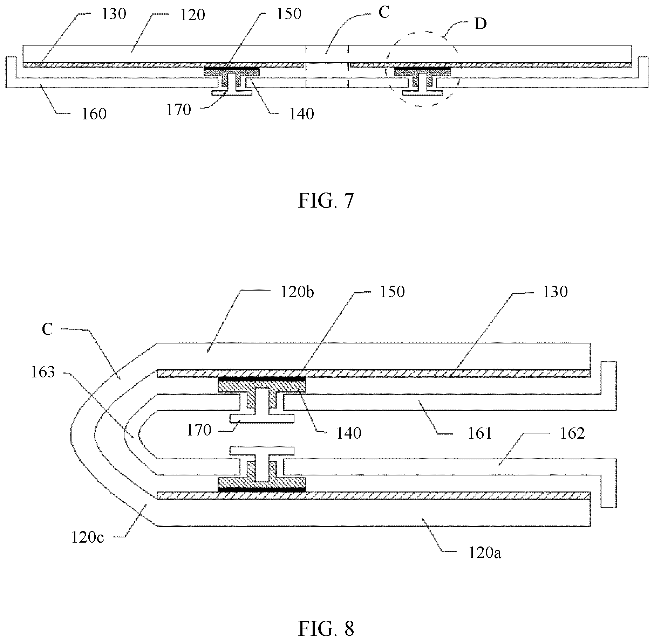

FIG. 7 is a schematic diagram of the foldable display mounting structure in an unfolded state. FIG. 8 is a schematic diagram of the foldable display mounting structure in a folded state. As shown in FIG. 7 and FIG. 8, the foldable display mounting structure provided in this application includes:
a foldable display 120;
a support mechanical part 130, where the support mechanical part 130 is fixedly connected to the foldable display 120, the support mechanical part 130 is located on a side, facing a housing 110, of the foldable display 120, and is configured to support the foldable display 120; and
at least one connecting piece 140, where the connecting piece 140 is fixed to the support mechanical part 130 by using a connection layer 150, the connecting piece 140 is fixedly connected to a middle frame 160 of an electronic device 100, and is configured to mount the foldable display 120 and the support mechanical part 130 on the electronic device 100.

Specifically, in this embodiment, the support mechanical part 130 is fixedly disposed on the side, facing the housing 110 (that is, facing the interior of the electronic device 100), of the foldable display 120. In other words, the foldable display 120 is fixedly disposed on the support mechanical part 130. The support mechanical part 130 may be configured to support the foldable display 120, and the foldable display 120 may be mounted on the electronic device by using the support mechanical part 130. The connecting piece 140 is fixedly disposed on the support mechanical part 130. In addition, the connecting piece 140 is fixedly connected to the support mechanical part 130 by using the connection layer 150, the connecting piece 140 is fixedly connected to the middle frame 160 of the electronic device 100, and is configured to mount the support mechanical part 130 and the foldable display 120 on the electronic device 100.

In this embodiment of this application, the connection layer 150 may be a thermosetting layer. The thermosetting layer 150 is obtained by curing a thermosetting material. In a curing process, the connecting piece 140 may be reliably fixed to the support mechanical part 130.

In a conventional technology, the connecting piece 140 is fixed to the support mechanical part 130 through welding (where a welding temperature is usually high). In comparison, in this application, the connecting piece 140 is fixed to the support mechanical part 130 by using the thermosetting layer 150. In a process of forming the thermosetting layer, no excessively high temperature is required, and a joint between the support mechanical part 130 and the connecting piece 140 does not deform due to local overheating and stress, so that no mold mark or convex hull is generated on a surface of the foldable display during usage. In this way, product competitiveness is improved.

In addition, in this application, the connecting piece 140 is fixed to the support mechanical part 130 by using the thermosetting layer 150. In comparison, in the conventional technology, the connecting piece 140 is fixed to the support mechanical part 130 through welding, a processing technology is simple, processing efficiency is high, and production costs are reduced.

The thermosetting layer 150 may be obtained by curing a thermosetting material. For example, a solid-state or liquid-state thermosetting material may be disposed at a corresponding position of the support mechanical part 130, the connecting piece 140 is disposed on the thermosetting material, and then the thermosetting material is heated, to perform a thermosetting reaction. After the thermosetting layer 150 is formed, the connecting piece 140 may be reliably fixed to the support mechanical part 130. Because the joint between the support mechanical part 130 and the connecting piece 140 does not deform due to local overheating, no mold mark or convex hull is generated on the surface of the foldable display during usage.

The thermosetting material may be any one or more of thermosetting resin, thermosetting rubber, thermosetting plastic, and the like.

Preferably, the thermosetting material is the thermosetting resin. In other words, the thermosetting layer 150 in this embodiment of this application is a thermosetting resin layer. Compared with another material such as thermosetting rubber, the thermosetting resin layer has characteristics of high adhesive strength and high modulus, and has good bonding reliability. This facilitates a reliable connection between the connecting piece 140 and the support mechanical part 130. In addition, a thickness of the thermosetting resin is uniform and controllable, and the thermosetting resin can be cut into different shapes through die cut. This facilitates generation and processing, and helps reduce production costs.

The following describes performance of the thermosetting resin layer by using specific embodiments.

In Embodiment 1, the connection layer 150 is a thermosetting resin layer. The connecting piece 140 shown in FIG. 7 is fixed to the support mechanical part 130 by using the thermosetting resin layer, and adhesive strength and modulus are tested. After the test, a test result is that the adhesive strength of the thermosetting resin layer is 5 MPa (MPa), and the modulus is 30 to 40 MPa.

In Comparative embodiment 1, the connection layer 150 is a thermosetting silicone layer. The connecting piece 140 shown in FIG. 7 is fixed to the support mechanical part 130 by using the thermosetting silicone layer, and adhesive strength and modulus are tested in a test condition the same as that in Embodiment 1. After the test, a test result is that the adhesive strength of the thermosetting silicone layer is 0.5 MPa, and the modulus is 30 to 40 MPa.

In Comparative embodiment 2, the connection layer 150 is an adhesive layer. The connecting piece shown in FIG. 7 is fixed to the support mechanical part 130 by using the adhesive layer, and adhesive strength and modulus are tested in a test condition the same as that in Embodiment 1. After the test, a test result is that the adhesive strength of the adhesive layer is 0.5 MPa, and the modulus is 30 to 40 MPa. Table 1 simultaneously shows the test results of the three embodiments.

**Table 1**

| Embodiment | Adhesive strength | Modulus |
|---|---|---|
| Embodiment 1 | 5 MPa | 30 to 40 MPa |
| Comparative embodiment 1 | 0.5 MPa | 30 to 40 MPa |
| Comparative embodiment 2 | 0.8 MPa | 0.1 MPa |

By analyzing and comparing the foregoing three groups of test results, it can be found that the adhesive strength of the thermosetting resin layer in Embodiment 1 is far greater than the adhesive strength of the thermosetting silicone layer in Comparative embodiment 1 and the adhesive strength of the adhesive layer in Comparative embodiment 2. In addition, the modulus of the thermosetting resin layer in Embodiment 1 is also far greater than the modulus of the adhesive layer in Comparative embodiment 2. Although the modulus of the thermosetting resin layer in Embodiment 1 is equivalent to the modulus of the thermosetting silicone layer in Comparative embodiment 1, performance of the adhesive strength of the thermosetting resin layer in Embodiment 1 is far greater than that of the adhesive strength in Comparative embodiment 1.

The test results show that, in terms of comprehensive performance, the thermosetting resin layer has characteristics of high adhesive strength and high modulus, and has good bonding reliability. This facilitates a reliable connection between the connecting piece 140 and the support mechanical part 130.

Preferably, thermosetting resin may be at least one of epoxy resin, acrylic resin, polyurethane, and the like. In other words, the thermosetting resin layer may be formed by thermally curing at least one of the epoxy resin, the acrylic resin, and the polyurethane. The foregoing materials have higher adhesive strength. By selecting the foregoing materials, the thermosetting layer may be disposed as thin as possible on the premise that reliable connection and fixing are satisfied. This helps reduce a thickness of the electronic device, facilitate a light and thin design of the electronic device, and improve product competitiveness.

Optionally, a thickness of the thermosetting resin layer may be greater than 0.02 millimeter. For example, the thickness of the thermosetting resin layer may be 0.02 to 0.05 millimeter. For example, the thickness of the thermosetting resin layer may be any one of 0.025 millimeter, 0.030 millimeter, 0.035 millimeter, 0.040 millimeter, or 0.045 millimeter. In this embodiment of this application, the foldable display 120 may be fixed to the support mechanical part 130 by using a grid adhesive tape. Alternatively, the foldable display 120 may be fixedly connected to the support mechanical part 130 in another manner such as glue. This is not limited in this application.

As shown in FIG. 7 and FIG. 8, in this embodiment of this application, the support mechanical part 130 is a metal sheet, and the metal sheet should be as light and thin as possible while the metal sheet has strength and can provide sufficient support. For example, the support mechanical part 130 may be any one of a copper sheet, a stainless steel sheet, an aluminum sheet, and various alloy (for example, copper alloy) sheets. In this way, it is ensured that the support mechanical part 130 has strength and can provide sufficient support, and further has a feature of being light and thin.

In another embodiment, because the connecting piece 140 does not need to be fixed to the support mechanical part 130 through welding, the support mechanical part 130 may alternatively be a non-metallic sheet that has strength and can provide sufficient support, for example, may be a plastic sheet. This is not limited in this application. The foregoing configuration helps reduce a weight, facilitate a light and thin design of the electronic device, and improve product competitiveness.

In addition, in another embodiment, the support mechanical part 130 may alternatively be a structure other than a sheet structure. This is not limited in this application.

As shown in FIG. 7 and FIG. 8, to ensure mounting reliability, two or more connecting pieces 140 may be disposed, and fixed to a side, facing the housing 110, of the support mechanical part 130. For example, the plurality of connecting pieces 140 may be evenly distributed on an inner side of the support mechanical part 130. In this way, the connecting piece 140 inside the electronic device 100 may be disposed based on a specific requirement, so that the foldable display 120 may be evenly disposed. Therefore, a good image presentation effect is achieved. Alternatively, arrangement may be performed as required based on a specific requirement, for example, arrangement may be performed based on a triangle or a rectangle, or arrangement may be performed based on an irregular shape. The arrangement manner is not limited in this application.

As shown in FIG. 7 and FIG. 8, the connecting piece 140 may be fixedly connected to the middle frame 160 of the electronic device 100. In other words, the foldable display 120 and the support mechanical part 130 may be fixedly disposed on the middle frame 160 by using the connecting piece 140. In this way, the foldable display 120 may be indirectly connected to the middle frame 160 by using the connecting piece 140, to improve stability. Optionally, the connecting piece 140 is fixedly connected to the middle frame 160 of the electronic device 100 in a detachable manner, to facilitate maintenance of the electronic device.

As shown in FIG. 8, the middle frame 160 in this application is also foldable, and at least a part that is of the middle frame 160 and that is located in the bent part C should be made of a flexible and foldable material. For example, the middle frame 160 may include three parts. A first part 161 and a second part 162 located at two ends are made of rigid materials (for example, metallic materials), to ensure sufficient mechanical strength. A third part 163 located at the bent part C is connected to the first part 161 and the second part 162, and is made of a flexible and foldable material. Optionally, the first part 161 and the second part 162 of the middle frame may alternatively be not foldable. This is not required. The third part 163 is made of the flexible and foldable material.

Optionally, the first part 161, the second part 162, and the third part 163 of the middle frame are not foldable, and are connected by using a foldable material to satisfy a requirement for flexibility of the middle frame.

Optionally, the middle frame 160 may alternatively be an integrated structure, and the entire middle frame 160 is made of the flexible and foldable material. This is not limited in this application.

Optionally, the flexible and foldable material may be another material such as flexible graphite or flexible plastic. This is not limited in this application.

It should be understood that, that the connecting piece 140 is fixedly connected to the middle frame 160 of the electronic device 100 may be that the connecting piece 140 is directly connected to the middle frame 160, or may be that the connecting piece 140 is indirectly connected to the middle frame 160 by using an intermediate medium. In addition, in another embodiment, the connecting piece 140 may alternatively be fixedly connected to another part of the electronic device 100. This is not limited in this application.

As shown in FIG. 7 and FIG. 8, in this embodiment, optionally, the connecting piece 140 is a nut, and the support mechanical part 130 and the foldable display 120 are mounted by using a screw 170 fitting the nut. The support mechanical part 130 and the foldable display 120 may be mounted on the middle frame 160 of the electronic device 100 by using the connecting piece 140 and the screw 170 fitting the connecting piece 140.

As shown in FIG. 7 and FIG. 8, in this embodiment, a through hole may be provided at a corresponding position of the middle frame 160, and the screw 170 may pass through the through hole and be locked into the nut 140, so that the support mechanical part 130 and the foldable display 120 are mounted on the middle frame 160.

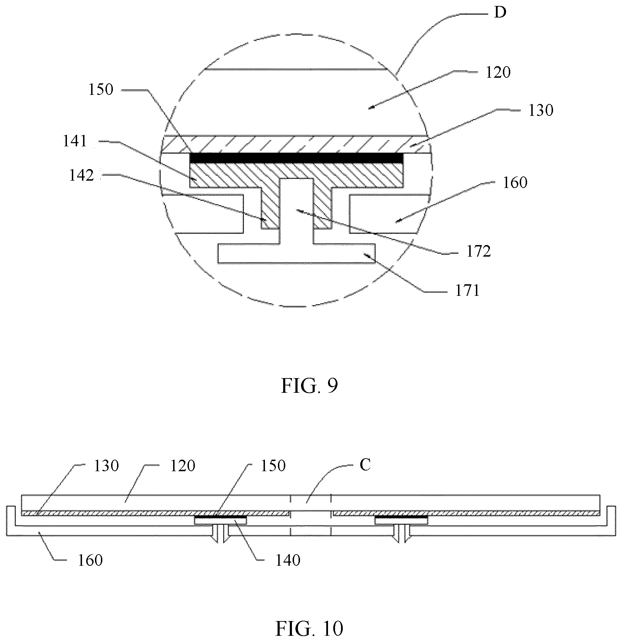

FIG. 9 is an example of a zoom-in diagram of an area D in FIG. 7. As shown in FIG. 9, the connecting piece 140 includes a first connecting part 141 and a second connecting part 142 that are connected to each other. The first connecting part 141 is in a disk shape, and is connected to the support mechanical part 130 by using the thermosetting layer 150. The second connecting part 142 is in a cylinder shape, has a front-end opening, and is provided with an internal thread on an inner wall. The screw 170 includes a pan head part 171 and a nail part 172. An external thread adapted to the internal thread is provided outside the nail part 172. The nail part 172 and the second connecting part 142 can fit each other to fix the support mechanical part 130 and the foldable display 120 to the middle frame 160 of the electronic device 100. A size of the pan head part 171 is greater than a diameter of the through hole, so that a locking function can be implemented.

Optionally, because the connection does not need to be performed through welding, the connecting piece 140 may be made of a non-metallic material. For example, the connecting piece 140 may be made of plastic. The foregoing configuration helps reduce a weight, facilitate a light and thin design of the electronic device, and improve product competitiveness. Optionally, the screw may alternatively be made of plastic.

In this embodiment, the connecting piece 140 is a nut. In another embodiment, the connecting piece 140 may alternatively be another connection structure such as a buckle or a rivet. This is not limited in this application. In this way, the connecting piece 140 can be easily disassembled, to facilitate maintenance of the electronic device.

FIG. 10 is a schematic diagram of another example of the foldable display mounting structure. In FIG. 10, the connecting piece 140 is a buckle. In this case, a slot matching the buckle may be provided on the middle frame 160, and the buckle is embedded into the slot, to mount and fix the support mechanical part 130 and the foldable display 120.

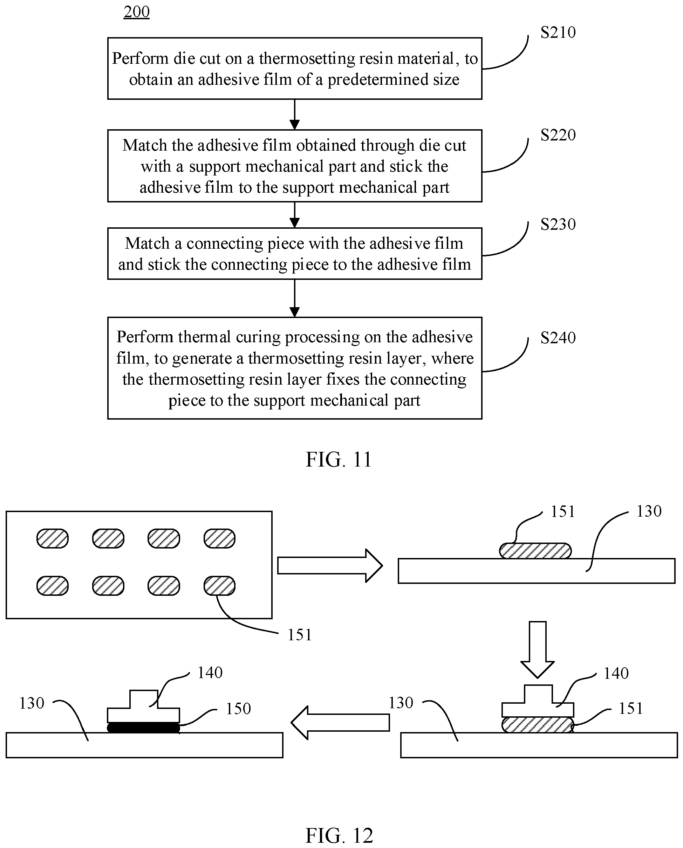

Based on the foregoing embodiments, an embodiment of this application further provides a processing method, which can be used to produce the foldable display mounting structure provided in the foregoing embodiments. FIG. 11 is a flowchart of a processing method 200 according to an embodiment of this application. FIG. 12 is a schematic diagram of the processing method 200 according to this embodiment of this application. The method 200 includes the following steps.

Step S210: Perform die cut on a thermosetting resin material, to obtain an adhesive film 151 of a predetermined size. Step S220: Match the adhesive film 151 obtained through die cut with a support mechanical part 130 and stick the adhesive film 151 to the support mechanical part 130.

Step S230: Stick a connecting piece 140 to a corresponding position of the adhesive film 151.

Step S240: Perform thermal curing processing on the adhesive film 151, to obtain a thermosetting resin layer 150, where the thermosetting resin layer 150 fixes the connecting piece 140 to the support mechanical part 130.

Specifically, die cut is first performed on the thermosetting resin material, to obtain the adhesive film 151 of the predetermined size, and then the adhesive film 151 obtained through die cut is stuck to the support mechanical part 130 by using a process such as sticking performed by using a die cut piece or sticking performed by using a jig. Because of tackiness of the adhesive film 151, heating processing does not need to be performed when sticking is performed. Then, the connecting piece 140 is stuck to an upper surface of the adhesive film 151, and thermal curing processing (for example, heating of the adhesive film 151) is performed on the adhesive film 151, to generate the thermosetting resin layer 150. The thermosetting resin layer 150 fixes the connecting piece 140 to the support mechanical part 130.

Optionally, the predetermined size of the adhesive film may be determined based on a size of the connecting piece. Optionally, the support mechanical part 130 to which the adhesive film 151 and the connecting piece 140 are stuck may be sent to a pressure oven for thermal curing processing.

After the adhesive film 151 is sent to the pressure oven, the adhesive film 151 is heated for specific duration at a specific temperature and air pressure in the pressure oven. The thermosetting resin layer 150 is obtained, in the foregoing environment, for the adhesive film 151 made of the thermosetting resin material, and the connecting piece 140 is fixed to the support mechanical part 130. Because the temperature during thermal curing is relatively low, a surface of the metal sheet does not deform due to local overheating. In addition, the thermosetting resin layer 150 has characteristics of high adhesive strength and high modulus, and has good bonding reliability. This facilitates a reliable connection between the connecting piece and the support mechanical part.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A foldable display mounting structure, usable in an electronic device (100), wherein the foldable display mounting structure comprises: a foldable display (120), wherein the foldable display is flexible and bendable, the foldable display comprises a flexible cover (121) and a flexible displaying module (122), both the flexible cover and the flexible displaying module are flexible and bendable, the flexible cover is transparent, the flexible displaying module displays through the flexible cover, the foldable display further comprises a first displaying part (120a) and a second displaying part (120b), and both the first displaying part and the second displaying part are configured to display information;
a support mechanical part (130), wherein the support mechanical part is fixedly connected to the foldable display, the support mechanical part is located on a side, facing a housing of the electronic device, of the foldable display, and is configured to support the foldable display; and
at least one connecting piece (140), wherein the connecting piece is fixed to the support mechanical part by using a thermosetting resin layer (150), the connecting piece is fixedly connectable to a middle frame of the electronic device, and is configured to mount the foldable display and the support mechanical part on the electronic device

2. The foldable display mounting structure according to claim 1, wherein the thermosetting resin layer is formed by thermally curing at least one of epoxy resin, acrylic resin, and polyurethane.

3. The foldable display mounting structure according to claim 1 or 2, wherein the connecting piece is made of a non-metallic material.

4. The foldable display mounting structure according to any one of claims 1 to 3, wherein there are two or more connecting pieces, and the connecting pieces are fixed to a side, intended to face the housing, of the support mechanical part.

5. The foldable display mounting structure according to any one of claims 1 to 4, wherein the connecting piece is fixedly connectable to the middle frame of the electronic device in a detachable manner.

6. The foldable display mounting structure according to any one of claims 1 to 5, wherein the support mechanical part is a metal sheet.

7. The foldable display mounting structure according to any one of claims 1 to 6, wherein the connecting piece is any one of a nut, a buckle, and a rivet.

8. A foldable electronic device (100), comprising a housing (110) and a middle frame (160), wherein an electronic element is disposed in the housing, and the foldable electronic device further comprises the foldable display mounting structure of claim 1.

9. The electronic device according to claim 8, wherein the thermosetting resin layer is formed by thermally curing at least one of epoxy resin, acrylic resin, and polyurethane.

10. The electronic device according to claim 8 or 9, wherein the connecting piece is made of a non-metallic material.

11. The electronic device according to any one of claims 8 to 10, wherein there are two or more connecting pieces, and the connecting pieces are fixed to a side, facing the housing, of the support mechanical part.

12. The electronic device according to any one of claims 8 to 11, wherein the connecting piece is fixedly connected to the middle frame of the electronic device in a detachable manner.

13. The electronic device according to any one of claims 8 to 12, wherein the support mechanical part is a metal sheet.

14. The electronic device according to any one of claims 8 to 13, wherein the connecting piece is any one of a nut, a buckle, and a rivet.

## Patentansprüche

1. Montagestruktur für eine klappbare Anzeige, die in einer elektronischen Vorrichtung (100) verwendbar ist, wobei die Montagestruktur für eine klappbare Anzeige umfasst:
eine klappbare Anzeige (120), wobei die klappbare Anzeige flexibel und biegbar ist, die klappbare Anzeige eine flexible Abdeckung (121) und ein flexibles Anzeigemodul (122) umfasst, sowohl die flexible Abdeckung als auch das flexible Anzeigemodul flexibel und biegbar sind, die flexible Abdeckung transparent ist, das flexible Anzeigemodul durch die flexible Abdeckung hindurch anzeigt, die klappbare Anzeige ferner einen ersten Anzeigeteil (120a) und einen zweiten Anzeigeteil (120b) umfasst und sowohl der erste Anzeigeteil als auch der zweite Anzeigeteil konfiguriert sind, um Informationen anzuzeigen;
ein mechanisches Stützteil (130), wobei das mechanische Stützteil mit der klappbaren Anzeige fest verbunden ist, sich das mechanische Stützteil an einer Seite der klappbaren Anzeige, die einem Gehäuse der elektronischen Vorrichtung zugewandt ist, befindet und konfiguriert ist, um die klappbare Anzeige zu stützen; und
mindestens ein Verbindungsstück (140), wobei das Verbindungsstück durch Verwenden einer Schicht (150) aus wärmehärtbarem Harz an dem mechanischen Stützteil befestigt ist, wobei das Verbindungsstück mit einem Mittelrahmen der elektronischen Vorrichtung fest verbindbar ist, und konfiguriert ist, um die klappbare Anzeige und das mechanische Stützteil an der elektronischen Vorrichtung zu montieren.

2. Montagestruktur für eine klappbare Anzeige nach Anspruch 1,
wobei die Schicht aus wärmehärtbarem Harz durch Wärmeaushärten mindestens eines von Epoxidharz, Acrylharz und Polyurethan ausgebildet wird.

3. Montagestruktur für eine klappbare Anzeige nach Anspruch 1 oder 2,
wobei das Verbindungsstück aus einem nichtmetallischen Material hergestellt ist.

4. Montagestruktur für eine klappbare Anzeige nach einem der Ansprüche 1 bis 3,
wobei zwei oder mehr Verbindungsstücke vorhanden sind und die Verbindungsstücke an einer Seite des mechanischen Stützteils befestigt sind, die vorgesehen ist, um dem Gehäuse zugewandt zu sein.

5. Montagestruktur für eine klappbare Anzeige nach einem der Ansprüche 1 bis 4,
wobei das Verbindungsstück in einer abnehmbaren Weise mit dem Mittelrahmen der elektronischen Vorrichtung fest verbindbar ist.

6. Montagestruktur für eine klappbare Anzeige nach einem der Ansprüche 1 bis 5,
wobei das mechanische Stützteil ein Metallblech ist.

7. Montagestruktur für eine klappbare Anzeige nach einem der Ansprüche 1 bis 6,
wobei das Verbindungsstück ein beliebiges von einer Mutter, einer Schnalle oder einem Niet ist.

8. Klappbare elektronische Vorrichtung (100), die ein Gehäuse (110) und einen Mittelrahmen (160) umfasst, wobei ein elektronisches Element in dem Gehäuse angeordnet ist, und die klappbare elektronische Vorrichtung ferner die Montagestruktur für eine klappbare Anzeige nach Anspruch 1 umfasst.

9. Elektronische Vorrichtung nach Anspruch 8, wobei die Schicht aus wärmehärtbarem Harz durch Wärmeaushärten mindestens eines von Epoxidharz, Acrylharz und Polyurethan ausgebildet ist.

10. Elektronische Vorrichtung nach Anspruch 8 oder 9,
wobei das Verbindungsstück aus einem nichtmetallischen Material hergestellt ist.

11. Elektronische Vorrichtung nach einem der Ansprüche 8 bis 10,
wobei zwei oder mehr Verbindungsstücke vorhanden sind und die Verbindungsstücke an einer Seite, die dem Gehäuse zugewandt ist, des mechanischen Stützteils befestigt sind.

12. Elektronische Vorrichtung nach einem der Ansprüche 8 bis 11,
wobei das Verbindungsstück in einer abnehmbaren Weise mit dem Mittelrahmen der elektronischen Vorrichtung fest verbunden ist.

13. Elektronische Vorrichtung nach einem der Ansprüche 8 bis 12,
wobei das mechanische Stützteil ein Metallblech ist.

14. Elektronische Vorrichtung nach einem der Ansprüche 8 bis 13, wobei das Verbindungsstück ein beliebiges von einer Mutter, einer Schnalle oder einem Niet ist.

## Revendications

1. Structure de montage d'écran pliable, utilisable dans un dispositif électronique (100), dans laquelle la structure de montage d'écran pliable comprend : un écran pliable (120), dans laquelle l'écran pliable est flexible et courbable, l'écran pliable comprend un couvercle flexible (121) et un module d'affichage flexible (122), le couvercle flexible et le module d'affichage flexible sont tous deux flexibles et courbables, le couvercle flexible est transparent, le module d'affichage flexible s'affiche à travers le couvercle flexible, l'écran pliable comprend en outre une première partie d'affichage (120a) et une seconde partie d'affichage (120b), et la première partie d'affichage et la seconde partie d'affichage sont toutes deux configurées pour afficher des informations ;
une partie mécanique de support (130), dans laquelle la partie mécanique de support est reliée à demeure à l'écran pliable, la partie mécanique de support est située sur un côté, face à un boîtier du dispositif électronique, de l'écran pliable et est conçue pour supporter l'écran pliable ; et
au moins une pièce de liaison (140), dans laquelle la pièce de liaison est fixée à la partie mécanique de support en utilisant une couche de résine thermodurcissable (150), la pièce de liaison pouvant être reliée à demeure à un cadre central du dispositif électronique,
et est conçue pour monter l'écran pliable et la partie mécanique de support sur le dispositif électronique.

2. Structure de montage d'écran pliable selon la revendication 1, dans laquelle la couche de résine thermodurcissable est formée par le durcissement thermique d'au moins l'un parmi une résine époxy, une résine acrylique ou un polyuréthane.

3. Structure de montage d'écran pliable selon la revendication 1 ou 2, dans laquelle la pièce de liaison est constituée d'un matériau non métallique.

4. Structure de montage d'écran pliable selon l'une quelconque des revendications 1 à 3, dans laquelle il y a au moins deux pièces de liaison, et les pièces de liaison sont fixées sur un côté, destiné à faire face au boîtier, de la partie mécanique de support.

5. Structure de montage d'écran pliable selon l'une quelconque des revendications 1 à 4, dans laquelle la pièce de liaison peut être reliée à demeure au cadre central du dispositif électronique de manière amovible.

6. Structure de montage d'écran pliable selon l'une quelconque des revendications 1 à 5, dans laquelle la partie mécanique de support est une feuille métallique.

7. Structure de montage d'écran pliable selon l'une quelconque des revendications 1 à 6, dans laquelle la pièce de liaison est l'un quelconque parmi un écrou, une boucle ou un rivet.

8. Dispositif électronique pliable (100), comprenant un boîtier (110) et un cadre central (160), dans lequel un élément électronique est disposé dans le boîtier, et le dispositif électronique pliable comprend en outre la structure de montage d'écran pliable selon la revendication 1.

9. Dispositif électronique selon la revendication 8, dans lequel la couche de résine thermodurcissable est formée par le durcissement thermique d'au moins l'un parmi une résine époxy, une résine acrylique et un polyuréthane.

10. Dispositif électronique selon la revendication 8 ou 9, dans lequel la pièce de liaison est constituée d'un matériau non métallique.

11. Dispositif électronique selon l'une quelconque des revendications 8 à 10, dans lequel il y a au moins deux pièces de liaison, et les pièces de liaison sont fixées sur un côté, faisant face au boîtier, de la partie mécanique de support.

12. Dispositif électronique selon l'une quelconque des revendications 8 à 11, dans lequel la pièce de liaison est reliée à demeure au cadre central du dispositif électronique de manière amovible.

13. Dispositif électronique selon l'une quelconque des revendications 8 à 12, dans lequel la partie mécanique de support est une feuille métallique.

14. Dispositif électronique selon l'une quelconque des revendications 8 à 13, dans lequel la pièce de liaison est l'un quelconque parmi un écrou, une boucle ou un rivet.
